# EUROPEAN PATENT SPECIFICATION

(11) **EP 0 579 218 B1**
(45) Date of publication and mention of the grant of the patent: **10.12.1997**
(21) Application number: 93111326.0
(22) Date of filing: 14.07.1993
(51) Int. Cl.: F02B 31/00, F02D 33/02

(54) **Method for controlling an intake air supply to an internal combustion engine and an intake air control system therefor**
Verfahren zur Steuerung der Ansaugluft einer Brennkraftmaschine und Vorrichtung zur Steuerung der Ansaugluft dafür
Méthode de commande d'alimentation de l'air d'admission d'un moteur à combustion interne et système de commande de l'air d'admission à cet effet

(30) Priority: 14.07.1992 JP 186501/92
(43) Date of publication of application: 19.01.1994
(73) Proprietor: YAMAHA HATSUDOKI KABUSHIKI KAISHA, Iwata-shi Shizuoka-ken, 438 (JP)
(72) Inventor: Suzuki, Mitsuo, Iwata-shi, Shizuoka-ken 438 (JP); Higaki, Yoshiyuki, Iwata-shi, Shizuoka-ken 438 (JP); Ito, Masahiro, Iwata-shi, Shizuoka-ken 438 (JP)
(74) Representative: Grünecker, Kinkeldey, Stockmair & Schwanhäusser Anwaltssozietät

(56) References cited:
- EP-A- 0 071 179
- EP-A- 0 352 657
- DE-A- 3 500 774
- DE-A- 3 638 021
- GB-A- 2 196 388
- PATENT ABSTRACTS OF JAPAN vol. 9, no. 114 (M-380)(1837) 18 May 1985 & JP-A-60 001 335
- PATENT ABSTRACTS OF JAPAN vol. 15, no. 329 (M-1149) 21 August 1991 & JP-A-3 124 903

## Description

The present invention relates to an intake air supply to an internal combustion engine comprising at least one air intake passage the cross-sectional air flow area thereof is controlled by a main throttle valve while another intake air control valve disposed downstream of the main throttle valve is controlled in a load responsive manner, whereby said another intake air control valve is controlled in terms of the amount of intake air per engine revolution such that the intake air control valve is kept fully closed for partially closing a flow cross-section of the intake passage until an increasing amount of intake air per one engine revolution reaches a predetermined first threshold bₛ and that the intake air control valve is kept fully opened until a decreasing amount of intake air per one engine revolution reaches a predetermined second threshold b₀ and that the intake air control valve is controlled to take an intermediate position when the amount of intake air is between the first and second thresholds bₛ,b₀. Moreover, the present invention relates to an intake air control system for an internal combustion engine.

As is well known in the art for reducing the fuel consumption of the engine it is effective to produce tumbles (vertical vertices) in the combustion chamber and to stabilise lean combustion by raising the flow speed of the intake air even in an engine operating range where the amount of intake air supplied is smaller. Accordingly, the applicant has already proposed a system for producing such tumbles by means of disposing an intake air control valve rotatably in a bottom wall side portion of the intake passage of the engine to force the intake air to flow along a ceiling wall side of the intake air passage by throttling the cross-section and effective flow area of the intake passage on the bottom wall side thereof, rendering the intake air to flow vertically into the combustion chamber from the centre side of the combustion chamber when the amount of intake air is smaller.

Such a system is designed to throttle the effective cross-section of the intake passage to produce tumbles by closing the intake air control valve when the amount of intake air is smaller and to reduce the flow resistance of the intake air by opening the intake air control valve when the amount of intake air is larger. On the other hand, in some cases the switching operation of the intake air control valve may constitute an increased flow resistance and care must be taken not to impair the output of the engine due to the provision of the intake air control valve.

The above mentioned method is known from GB-A-21 96 388.
However, according to this known method the intake air control valve will be switched irrespective of the engine speed leading to a frequent switching operation of the intake air control valve during engine operation conditions for which such a switching operation is not obligatory.

Accordingly, it is an objective of the present invention to provide an improved method for controlling an intake air supply as indicated above which facilitates the reduction of opening/closing switching operations of the intake air control valve and simultaneously enhances the longevity of said intake air control valve.

According to the invention, this objective is solved for a method as indicated above in that an intake air control valve is fully opened when the engine speed is equal to or higher than a predetermined high speed value or is fully closed when the engine speed is equal to or lower than a predetermined low speed value, irrespective of any throttle valve position or any amount of intake air per one revolution of the engine.

According to the invention, the intake air control valve will be kept at openings usual for the respective engine operating ranges and frequent opening/closing switching operation of the intake air control valve can be avoided. In addition, since the intake air control valve is kept fully opened although the required amount of intake air is small in the case where the throttle valve is fully closed while the engine speed is high, i.e. in the case of an engine brake condition, the flow speed of the intake air is lowered and the combustion efficiency is reduced so that a well working engine brake condition is obtained.

In addition, the above mentioned document discloses an intake air control system for an internal combustion engine basically having the same disadvantages as already discussed with respect to the above mentioned method.

Therefore, it is a further objective of the present invention to provide an improved intake air control system for an internal combustion engine for controlling an intake air supply which facilitates the reduction of opening-closing switching operations for the intake air control valve and simultaneously enhances the longevity of said intake air control valve.

According to the invention this further objective is solved by an Intake air control system for an internal combustion engine comprising at least one air intake passage controlled by a main throttle valve for feeding a combustion chamber of the engine through an intake valve opening controlled through a camshaft-operated intake valve, with an intake air control valve being disposed in the intake passage downstream of the main throttle valve to control the cross-sectional air flow area of the intake passage by a valve body of the intake air control valve which partially closes a flow cross-section of the intake passage when fully closed, a switching valve disposed in the intake passage in between the main throttle valve and the intake air control valve for controlling partially the cross-section of the intake passage upstream of the intake air control valve, and a control unit receiving engine load and engine speed responsive signals comprising a three dimensional control map for calculating an optimal opening position of the intake air control valve and outputting driving signals to a control motor adjusting the opening position of the intake air control valve and outputting driving signals to a switching motor for opening or closing said switching valve, whereby said control unit is adapted to fully open said intake air control valve when the engine speed is equal to or higher than a predetermined high speed value or to fully close said intake air control valve when the engine speed is equal to or lower than a predetermined low speed value, irrespective of any throttle value position or any amount of intake air per one revolution of the engine.

The afore-indicated control method is specifically advantageous in that the intake air control valve can be controlled at an optimum opening capable of raising the output of the engine while raising the flow speed of the intake air simultaneously restraining any drop in engine output as far as possible while improving (i.e. lowering) the fuel consumption.

According to an advantageous embodiment of the present invention the afore-indicated control strategy is further improved such that the first and second thresholds (which correspond to different closing times of the intake air control valve depending on whether the amount of intake air per one revolution of the engine increase from a lower value below the first threshold or on whether the amount of intake air per one revolution of the engine decreases from a higher value above the second threshold), in turn, depends on the engine speed.

This dependancy allows different types of engine to be considered.

According to yet another preferred embodiment of the method according to the present invention, the second threshold is greater than the first threshold and the amount of intake air per one revolution of the engine is determined in terms of the opening degree of a throttle valve of the engine.

Other preferred embodiments of the present invention are laid down in the further sub-claims.

In the following the present invention is explained in greater detail by means of an embodiment thereof in conjunction with the accompanying drawings wherein:
Figure 1 is a vertical cross-section of an engine (in parts schematically) with an intake air control system according to the present invention,
Figure 2 is an enlarged cross-sectional view of an intake air control valve portion and a partition plate portion of the intake air control system according to Figure 1,
Figure 3 is a sectional view taken along the line III-III of Figure 2,
Figure 4 is a sectional view taken along the line IV-IV of Figure 1,

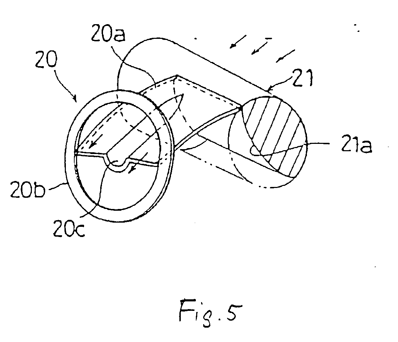

Figure 5 is a perspective view of a partitioning plate portion and a part of the intake air control valve according to Figure 1,
Figure 6 is a 3-dimensional map showing the relationship between engine speed, throttle valve opening and the opening degree of the intake air control valve, said map being stored in a control unit of the intake air control system according to Figure 1, and
Figure 7 is a flow chart for describing the function of the control system of the present embodiment.

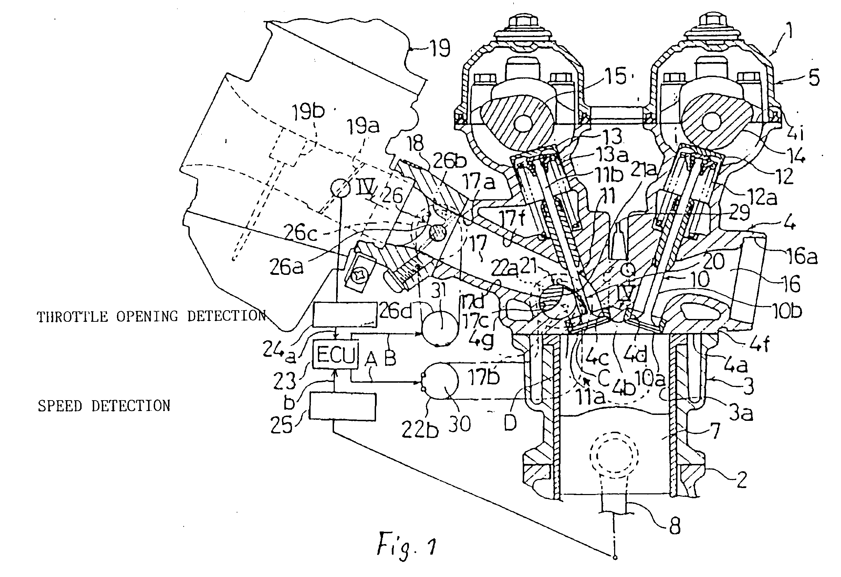

In Figure 1 the reference numeral 1 denotes a water cooled 4-cycle, 4-valve engine which is constructed by stacking and fastening through head bolts a cylinder block 3 and cylinder head 4 on a crankcase 2 and mounting a headcover 5 on a mating surface 4i on the headcover side of the cylinder head 4. A piston 7 is slidably inserted in each of the cylinder bores 3a formed through the cylinder block 3, each piston 7 being connected to a crankshaft (not shown) through a connecting rod 8.

A mating surface 4a of the cylinder head comprises a combustion cavity 4b formed thereon for defining a combustion chamber for each cylinder. Two intake valve openings 4c and two exhaust valve openings 4d open into this combustion cavity 4b the openings 4d of the exhaust valves 10 and the openings 4c of the intake valves 11 are disposed such that a valve head 10a of the exhaust valve 10 bind a valve head 11a of the intake valve 11 open or close said respective valve openings. Valve stems 10b and 11b of the exhaust and intake valves 10,11 extend slantly upward to form a predetermined angle therebetween when viewed in the camshaft direction. At the upper end of the valve stems 10b and 11b exhaust lifters 12 and intake lifters 13 are respectively mounted. Perpendicularly to the cylinder axis and in parallel to each other an exhaust camshaft 14 and an intake camshaft 15 are disposed above the lifters 12,13, respectively, for pushing and driving them. The reference numerals 12a and 13a denote valve springs for urging the exhaust and intake valves 10,11 in the closing direction while the reference numeral 29 denotes an ignition plug.

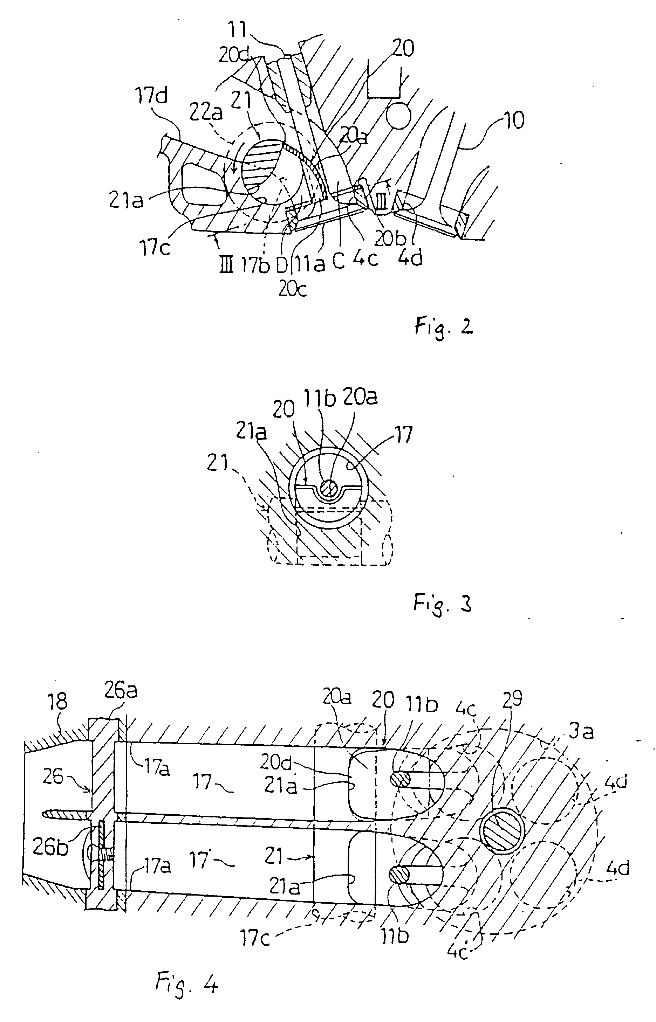

Two exhaust valve openings 4d are lead out to a front wall 4j of the cylinder head 4 through a bifurcated exhaust passage 16 and an exhaust pipe (not shown) is connected to an opening 16a of a wall surface of the exhaust passage 16. Two intake valve openings 4c and 4c' are lead out to a rear wall 4g of the cylinder head 4 through respective intake passages 17,17' which are parallel to each other as viewed in the direction of the cylinder axis (see Figure 4), said intake passages 17, 17' are arcuately curved from the intake valve opening 4c toward the rear wall 4g of the cylinder head 4 and then extend generally straight as viewed in the direction of the camshafts. A common carburetor joint 18 is connected to a wall opening 70a of each intake passage 17,17' and all intake passages 17,17' are joined into one passage in this carburetor joint 18. A carburetor 19 is connected to said carburetor joint 18, said carburetor 19 being of an automatic variable venturi type having a butterfly throttle valve to be opened or closed by a throttling operation and an piston valve 19b which is automatically opened or closed by the intake vacuum of the engine.

The intake passages 17,17', near the intake valve opening 4c, comprise a curved portion 17b providing a valve hole 17c so as to penetrate the cylinder head 4 in the direction of the camshafts. The axis of said valve hole 17c is positioned near the surface of a bottom wall 17d of the intake passage 17, 17' and it's portion within the intake passage 17,17' is formed generally semi-circularly and communicates the intake passages of two adjacent cylinders. In the valve hole 17c traversing the intake passages 17,17' an intake air control valve 21 for variying the cross-sectional passage or flow area of each intake passage 17,17' is rotatably accomodated providing valve portions 21a for opening or closing the respective intake passages 17,17'. Each of said valve portions 21a is formed by cutting off a part of a round bar so as to form a surface continous to the inner surface of the lower portion of the intake passages 17,17', said valve portions 21a being rotatable between a fully opened position at which the valve portions 21a are immersed in the valve hole 17c so as to become flush with the inner surface of the intake passages 17,17', and a fully closed postition at which the valve portions 21a are erected nearly perpendicularly with respect to the bottom wall 17d to throttle a cross-sectional flow area of the intake passages 17,17' to about one half thereof. In this case, the intake air control valve 21 rotates with the outer surface of the valve portion 21a facing upstream.

A switching valve 26 is disposed in the carburetor joint 18, said swithcing valve 26 comprising a valve shaft 26a penetrating the carburetor joint 18 in parallel with the intake air control valve 21 and a valve plate 26b fixed on the valve shaft 26a for opening or closing one of the intake passages, namely the intake passage 17' as shown in Figure 4. To the outer end portion of the intake air control valve 21 a control pulley 22a is fixed which is connected via a cable to a driving pulley 22b fixed on a control motor 30 as is shown in Figure 1. To the outer end portion of a switching valve 26 is fixed a switching pulley 26c which is connected via a cable to a driving pulley 26d fixed on the switching motor 31 (see Figure 1). The rotations of the control motor 22 and the switching motor 26 are controlled by a control unit (ECU) 23.

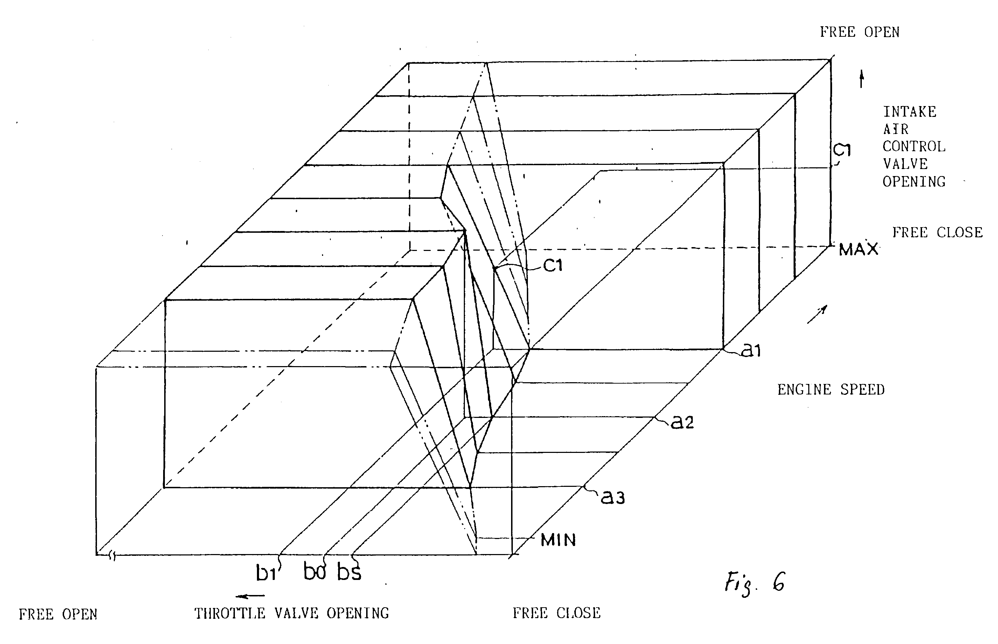

The ECU 23 receives an opening signal a of the throttle valve 19a obtained by a throttle opening sensor 24 and an engine speed responsive signal b obtained by a rotation sensor 25. The control unit (ECU) 23 feeds the control motor 30 with a control signal A for controlling the intake air control valve 21 according to a 3-dimensional map as shown in Figure 6, and feeds the switching motor 31 with a control signal B for closing the switching valve 26 in an engine operating range where the amount of intake air does not exceed a predetermined value and for opening the switching valve 26 in an engine operating range where the amount of intake air exceeds a predetermined value.

The control unit (ECU) further comprises first and second control maps for controlling the ignition timing of the engine. The first control map is a basic one and usually being used in case a intake air control valve 21 is not provided. In that case, with the aid of said first control map the ignition timing is set such that it may be fairly advanced while the amount of intake air supplied is small as the speed of combustion is low. Then, the ignition timing is gradually delayed further from said starting point as the amount of intake air increases and finally reaches an ideal one when the amount of intake air is high. The second control map is a basic one when an intake air control valve 21 is provided as in the present embodiment. In that case the ignition timing is set such that it may be delayed by about ten degrees further as compared with that of the first control map when the amount of intake air is low and that this delay may be varied generally proportional to the opening degree of the intake air control valve 21.

In the present embodiment, through the provision of the intake air control valve 21 and the possibility to raise the flow speed of the intake air through said intake air control valve 21 the ignition timing can be delayed to a substantially ideal timing even while the amount of intake air flow is low. Therefore, the ignition timing in that case is controlled according to the second control map stored in the control unit 23 improving, i.e. lowering the fuel consumption while the amount of intake air flow is low.

While the first control map is generally provided and applied in case there is no intake air control valve 21 provided also in the present embodiment, i.e. in case of having the engine equipped with an intake air control valve 21 the control of the ignition timing is switched to that first control map in case it is found by an acceleration sensor that the engine is being deccelerated. This is done as in such a case, since the engine speed is higher than a predetermined value of high engine speed, the intake air control valve 21 is kept fully opened (as described later on) although the throttle opening degree is low and otherwise the fuel consumption becomes worse because the ignition timing is not optimal although the engine break works well. Therefore, the control of the ignition timing is switched from the second control map to the first control map to obtain the optimal ignition timing.

On the other hand, the control unit (ECU) 23 controls the ignition timing and the position of the intake air control valve 21 during cold start engine operation for the purpose of quickly raising the temperature of the catalyst and, accordingly, raising the temperature rising speed of the catalytic converter. In this case, the temperature of the exhaust gas downstream of the catalyst is detected and, when the temperature is lower than a predetermined value, it is decided that the engine is in the cold start engine operating state and, consequently, the ignition timing is delayed from the standard value and the intake air control valve 21 is fully opened although the amount of intake air is yet small. By such a control action the combustion in the combustion chamber is made imperfect and afterburning is caused in the exhaust pipe or that area. Consequently, the rising speed of the temperature of the catalyst is raised which renders the catalyst operating quickly and within a short time so that an early start of catalytic cleaning effects for treating the exhaust gas is acquired.

As is derivable from Figures 3 and 4, the intake passage 17 not provided with the valve plate 26b of the switching valve 26 has a partition plate 20 disposed downstream of the intake air control valve 21. The partition plate 20 is formed by fixing an annular retaining ring 20b on the downstream end of a tongue-like partitioning portion 20a and the retaining ring 20b is caught and fixed by a valve seat press fitted in the intake valve opening 4c. The reference numeral 20c denotes an escape roof for avoiding interference between the partition 20 and the valve stem 11a of the intake valve 11. The partioning portion 20a extends generally along a centre line of the intake passage 17 and has a width generally equal to that of the intake passage 17. An upstream end 20d of the partition plate 20 is in contact with the upstream end portion of the valve portion 21a of the intake air control valve 21 when positioned at its fully closed position, so as to form a continous surface with same. Thus, the partitioning portion 20a partitions the intake passage 17 into a ceiling side passage C and a bottom side passage D.

In the following the function, control method and effects of the present invention are explained in greater detail.

In the intake air supply system according to this embodiment the control motor 30 opens or closes the intake air control valve 21 according to the control signal A from the control unit (ECU) 23 and the switching motor 31 opens or closes the switching valve 26 according to the control signal B from the control unit (ECU) 23.

First, in the low speed/low load engine operating range where the requirement for the amount of intake air is small, the intake air control valve 21 is rotated to its fully closed position as shown in Figure 1 and the valve portion 21a of the intake air control valve 21 throttles the intake passages 17,17' on the bottom wall side 17d and the switching valve 26 fully closes the one intake passage 17' as shown in Figures 1 and 4. As as result thereof the intake air is concentrated to the remaining intake passage 17 and flows only through the ceiling side portion C of said intake passage 17 which is partitioned by the partition plate 20 and then flows into the cylinder only from the upper side of the intake valve opening 4c as shown in Figure 4. Consequently, the flow of intake air is forced and given a certain directionality even in the case of only a small amount of intake air flow. In other words, the flow of intake air produces slanting tumbles flowing in a lateral direction along an inner surface of the cylinder as viewed in a direction of the cylinder axis, and flowing in a vertical direction along the cylinder axis as viewed in the direction of the camshafts.

Under medium speed/medium load conditions the required amount of intake air is medium, the intake air control valve 21 is rotated to the fully opened position to fully open the intake passages 17,17' and the switching valve 26 is held in the state for closing the one related intake passage 17'. Therefore, the intake air is concentrated to the other intake passage 17 and flows through the hole ceiling side and bottom side passages C and D of the intake passage 17 and then flows into the cylinder. The intake air control valve may be positioned at an intermediate opening position according to the degree of amount of intake air required.

Under high speed/high load operating conditions of the engine requiring a high amount of intake air to be supplied, the intake air control valve 21 is kept at the fully opened position and the switching valve 26 fully opens the one intake passage 17'. Therefore, the intake air flows into the cylinder from both intake valve openings 4c and 4c' through both intake passages 17,17'.

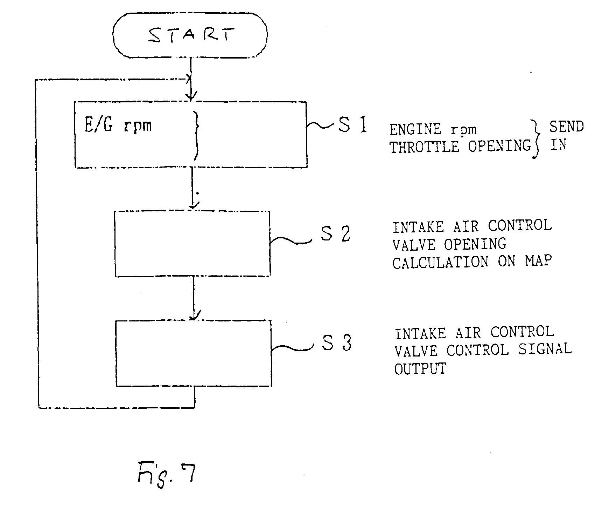

In the following the action of the intake air control valve 21 is described in further detail referring to the flow chart of Figure 7. When the program is started, the control unit (ECU) 23 reads the throttle valve opening signal a and the engine speed signal b (step S1). On the basis of the 3-dimensional map (see Figure 6) stored in the control unit 23, the control unit 23 calculates the optimal opening degree of the intake air control valve 21 (step S2) and outputs a driving signal A corresponding to the afore-indicated opening degree to the control motor 30 (Step S3) operating the intake air control valve 21.

When the main switch or ignition switch is turned off stopping the engine, the intake air control valve 21 is rotated to its fully opened position and is held at that position. When the main or ignition switch is turned on the next time, the intake air control valve 21 is rotated to the fully closed position and the opening or closing control of the intake air control valve 21 is started from said condition. Said strategy is applied for preventing fuel remaining on the wall surface of the intake passages 17,17' from collecting near the intake air control valve 21 while the engine is at rest and for that reason the intake air control valve 21 is held in its fully opened state while the main switch or ignition switch is turned off.

In the following the opening or closing control of the intake air control valve 21 is described in further detail referring to the diagram of Figure 6. As shown in solid lines in Figure 6, the intake air control valve 21 is set in its fully closed state irrespective of the throttle valve opening when the engine speed is lower than a3 and is set into its fully opened state irrespective of the throttle valve opening when the engine speed is higher than a1.

Before going into the further details of the control method based on the 3-dimensional map according to Figure 6 some basic deliberations behind said control method are explained as follows.

Considering that it is necessary to minutely set the opening degree of the intake air control valve in response to engine speed, throttle valve opening etc., for improving the fuel economy while restraining any drop of the engine output as far as possible, investigations and experiments were carried out to find an apprpriate relationship among the different parameters such as engine speed, throttle valve opening and opening degree of the intake air control valve. These investigations and experiments have lead to the 3-dimensional map of Figure 6 as a basis for performing the control method according to this embodiment.

First of all, the engine output (or torque) was measured while variying the opening degree of the intake air control valve keeping the engine speed and the throttle opening fixed at their respective values, i.e. a1 and b1. In this case, when the intake air control valve is gradually opened from the fully closed state, although the engine output initially increases, the increase of the engine output stops at a certain opening degree c1 of the intake air control valve. Therefore, it is useless to open the intake air control valve 21 further beyond this opening degree c1 as a further increase of the engine output cannot be obtained and, moreover, further increase would also be disadvantageous for producing tumbles. Therefore, it is considered to be effective to set the opening degree of the intake air control valve 21 at c1 for satisfiying the requirements of low fuel consumption and high engine output under the operating conditions as determined by a1 and b1.

The afore-indicated initial increase of the engine output takes place as the flow resistance of intake air flow decreases and the amount of intake air increase as the intake air control valve 21 is opened. Moreover, a further increase of the engine output stops midway because the increase of the amount of intake air reaches a top level. Moreover, if the intake air control valve 21, contrary to the deliberations above, is gradually closed from the fully opened state while keeping the engine speed and throttle opening fixed at the values a1 and b1, although the engine output does not change at the beginning, the engine output begins to decrease at an opening degree which is the same as c1 for the case above where the intake air control valve 21 is gradually opened from the fully closed state.

Figure 6 is a graph showing the opening degree c of the intake air control valve 21 at which the afore-mentioned increase of the engine output stops or, to the contrary, the drop of the engine output as mentioned above begins while variying the engine speed a and the throttle valve opening b so as to cover the entire engine operating range. From the diagram of Figure 6 the following relationships are derivable:
In the range where the engine speed is, for example, a2 and the throttle valve opening is smaller than bₛ, although an increase of engine output is not found even if the intake air control valve 21 is opened from its fully closed state, an increase of engine output can be noted by opening the intake air control valve 21 at the throttle valve opening bₛ. Said throttle valve opening from which an increase of engine output is noted (starting from the fully closed position of the intake air control valve 21) is defined as the predetermined first threshold below which the intake air control valve 21 should be fully closed.

In the range wherein the engine speed is, for example, a2 and the throttle valve opening is larger than b₀, a drop of engine output is immediately noted if the intake air control valve 21 is closed from its fully opened state. When the intake air control valve 21 is closed to the throttle opening b₀ the engine output does not change firstly but a drop of engine output is found just thereafter. The throttle valve opening b₀ defining an opening degree of the intake air control valve 21 at which the engine output does not further change is considered as a predetermined second threshold defining a throttle opening degree beyond which the intake air control valve 21 should be kept fully opened.

Comparing the values bₛ and b₀ at the same engine speed it is found that the first threshold bₛ is smaller than the second threshold b₀. That is the throttle opening at which the intake air control valve 21 begins to be opened from its fully closed state is smaller than the throttle valve opening at which the intake air control valve 21 begins to be closed from its fully opened state.

Moreover, it has been considered that both the first and second predetermined thresholds bₛ and b₀ depend on engine speed. In case of a test engine the first and second predetermined thresholds bₛ and b₀ both became larger as the engine speed became higher which means that, when the engine speed becomes higher, the throttle valve opening range where the intake air control valve 21 is to be kept fully closed becomes wider and the throttle valve opening range where the intake air control valve 21 is to be kept fully opened becomes narrower. The dependancy of the first and second thresholds bₛ and b₀ on engine speed is considered to change according to the type of the engine, such as high speed oriented, low to medium speed oriented etc., determined by parameters such as the valve timings while the intake air control valve is opened, the shapes of the intake ports etc.

Of course the highest concept for embodiying the present invention aside from the throttle valve opening degree is to control the intake air control valve 21, i.e. the opening degree thereof, in correspondence to the amount of intake air required per each revolution of the crankshaft. The required amount of intake air per one revolution of the engine can be determined on the basis of any of the parameters such as throttle valve opening, air flow speed as detected by an air flow meter, intake passage vacuum etc.

Moreover, as indicated above the control of the intake air control valve 21 in terms of the required amount of intake air for the throttle valve opening degree can be cancelled, completely setting the intake air control valve into a fully opened state when the engine speed is higher than a predetermined high speed value whereas, similarly the intake air control valve can be set into the fully closed condition when the engine speed is lower than a predetermined low speed value, again irrespective of any usual control parameters of Figure 6 such as the throttle valve opening degree or the required amount of air flow through the intake passages. As the opening degree of the intake air control valve 21 is controlled according to the first and second thresholds bₛ, b₀ in terms of the required amount of intake air per one revolution of the engine and as the predetermined first threshold bₛ (below which the intake air control valve 21 should be completely closed) is set smaller than the predetermined second threshold b₀ (beyond which the intake air control valve 21 should be kept completely opened) and as preferably both of said first and second thresholds bₛ,b₀ depend on engine speed the opening degree of the intake air control valve 21 under all engine operating conditions is set to a value corresponding to test results capable of raising the flow speed of intake air and to promote the generation of tumbles, thus avoiding a drop of engine output as far as possible. Accordingly, the drop of engine output can be restrained to be practically neglectable while the fuel consumption is reduced.

Moreover, as the intake air control valve 21 can be kept at an intermediate opening condition between the first and second thresholds bₛ,b₀, the intake air control valve 21 is prevented from being abruptly fully opened or fully closed in an ON-OFF manner so that the combustion conditions can be stabilised.

The setting of the first and second thresholds bₛ,b₀ to depend on engine speed enables to set said thresholds optimal depending on the type of the engine. The overlaying control of the intake air control valve 21 exclusively in response to engine speed namely to set the intake air control valve 21 in its fully opened position when the engine speed is higher than a predetermined high speed value and to set the opening degree of the intake air control valve 21 in a fully closed condition when the engine speed is lower than a predetermined low speed value frequent adjusting (opening or closing) movements of the intake air control valve 21 can be avoided. Finally, in case of fully closing the throttle valve while the engine speed is high as it is the case, for example, in case of initiating an engine brake, since the intake air control valve 21 is kept in its fully opened state although the required amount of intake air is small, the flow speed of the intake air flow is reduced and the combustion efficiency is lowered so that the engine braking conditions work well and efficient engine braking is obtained.

Returning to the control method as embodied and exemplified through Figure 6, in the case where the engine speed is between a1 and a3 the intake air control valve 21 is held in its fully closed condition until the throttle valve opening exceeds the predetermined first threshold bₛ, is then gradually increasingly opened until the throttle valve opening reaches the predetermined second threshold b₀ and is held in it's fully opened state when the throttle valve opening is equal to or larger than the second threshold b₀. Accordingly, the opening or closing control of the intake air control valve 21 can be practised by means of referring to the predetermined first threshold bₛ and the predetermined second threshold b₀ as shown in double dotted chain lines in Figure 6, also in the case where the engine speed is lower than a3 and in the case where the engine speed is higher than a1.

As is clearly derivable from Figure 6, although the predetermined first threshold bₛ is set to be smaller than the predetermined second threshold b₀ at any engine speed and, therefore, the opening characteristic curve connecting both opening values bₛ and b₀ is inclined, this angle of inclination becomes larger in the higher engine speed range. This shows that, when closing the throttle valve, the intake air control valve 21 is rotated for closing as earlier as the engine speed becomes higher and, when opening the throttle valve in the opposite direction, the intake air control valve 21 is rotated for opening as later as the engine speed becomes higher.

As already indicated above, the first and second thresholds bₛ and b₀ are determined such as to become larger when the engine speed becomes higher. This means that the throttle valve opening range wherein the intake air control valve 21 is to be kept fully closed is set as wider as the engine speed becomes higher, and that the throttle valve opening range wherein the intake air control valve 21 is to be kept fully opened is set as narrower as the engine speed becomes higher.

In this embodiment, as the predetermined first threshold bₛ is set smaller than the second threshold b₀ while both thresholds bₛ and b₀ are set as larger as the engine speed becomes higher, the opening degree of the intake air control valve 21 can be controlled to an optimal opening degree, i.e. an opening capable of raising the flow speed of the intake air while minimising any drop of engine output. Moreover, as it is possible to raise the flow speed of the intake air even when the amount of intake air required is small combustion stability can be improved, fuel consumption can be reduced and any drop of engine output can be avoided as far as possible.

Moreover, as the predetermined first threshold bₛ is set smaller then the predetermined second threshold b₀, the opening degree of the intake air control valve 21 can be varied not in an ON-OFF manner between the fully opened state and the fully closed state, but smoothly through intermediate opening degress therebetween and, therefore, excessively abrupt change of the flow conditions of the intake air can be avoided which is desirable from the view point of stablising the combustion process within the combustion chamber.

Yet further, as the predetermined first threshold bₛ and the predetermined second threshold b₀ are determined such as to depend on engine speed, it is possible to render the opening/closing control characteristics of the intake air control valve 21 to correspond to the type and basic tuning of the engine more accurately. For example, in case where a torque valley is apt to appear in an engine speed range effective control for reducing such a area of reduced torque can be obtained by rendering said first and second thresholds bₛ,b₀ engine speed dependent. Moreover, as the required amount of intake air per each revolution of the crankshaft becomes smaller when the engine speed becomes higher it is desirable to keep the intake air control valve 21 closed until the throttle valve opening becomes comparitively larger. This requirement can be met in the present embodiment when both thresholds bₛ and b₀ are determined to larger values the engine speed becomes higher.

In this embodiment the usual opening/closing control of the intake air control valve 21 is overuled (or cancelled) under certain engine speed conditions such that the intake air control valve 21 is fully opened irrespective of the opening degree of the throttle valve 19a when the engine speed is equal to or higher than a predetermined high speed value a1 or, alternatively, the intake air control valve 21 is kept fully closed when the engine speed is equal to or lower than a predetermined low speed value a3. Therefore, the intake air control valve 21 will be kept at openings usual for the respective engine operating ranges and frequent opening/closing switching operation of the intake air control valve 21 can be avoided.

In this embodiment, since the intake air control valve 21 is kept fully opened although the required amount of intake air is small in the case where the throttle valve is fully closed while the engine speed is high, i.e. in the case of an engine brake condition, the flow speed of the intake air is lowered and the combustion efficiency is reduced and, consequently, a well working engine brake condition is obtained. In this case, the ignition timing control switch is switched to base further control on the first control map as indicated above, by which the increased delay of the ignition timing is cancelled and the ignition timing is set to values appropriate for operating ranges wherein the required amount of intake air is small as in a common system having no intake air control valve. By such setting, the fuel consumption is prevented from getting worse during the engine brake condition.

Although the embodiment is designed such that the intake air control valve 21 is kept fully opened when the main switch is turned off and can be fully opened when the main switch is turned on next time, the embodiment can be modified to the opposite such that the intake air control valve 21 is kept fully closed when the main switch is turned off and can be initially set in the fully closed state also when the main switch is turned on next time. In such a case the fuel remaining in the intake passages will collect near the intake valve opening while the engine is at rest which is effective for facilitating next engine starting.

Finally, although in this embodiment the intake air control valve 21 is controlled in response to a throttle valve opening as a parameter, similar effects can be obtained by controlling the intake air control valve 21 using the required amount of intake air per each revolution of the crankshaft as a parameter.

## Claims

1. Method for controlling an intake air supply to an internal combustion engine comprising at least one air intake passage (17,17') ) the cross-sectional air flow area thereof is controlled by a main throttle valve (19a) while another intake air control valve (21) disposed downstream of the main throttle valve (19a) is controlled in a load responsive manner, whereby said another intake air control valve (21) is controlled in terms of the amount of intake air per engine revolution such that the intake air control valve (21) is kept fully closed for partially closing a flow cross-section of the intake passage (17,17') ) until an increasing amount of intake air per one engine revolution reaches a predetermined first threshold (bₛ) and that the intake air control valve (21) is kept fully opened until a decreasing amount of intake air per one engine revolution reaches a predetermined second threshold (b₀) and that the intake air control valve (21) is controlled to take an intermediate position when the amount of intake air is between the first and second thresholds (bₛ,b₀), **characterized in that** the intake air control valve (21) is fully opened when the engine speed is equal to or higher than a predetermined high speed value (a₁) or is fully closed when the engine speed is equal to or lower than a predetermined low speed value (a₃), irrespective of any throttle valve position or any amount of intake air per one revolution of the engine.

2. Method as claimed in claim 1, **characterized in that** the second threshold (b₀) is greater than the first threshold (bₛ).

3. Method as claimed in claim 1 or 2, **characterized in that** the first and second thresholds (bₛ, b₀) in turn depend on engine speed.

4. Method as claimed in at least one of the preceding claims 1 to 3, **characterized in that** the amount of intake air per one engine revolution is determined in terms of the opening degree of a throttle valve (19a) of the engine.

5. Intake air control system for an internal combustion engine comprising at least one air intake passage (17,17') ) controlled by a main throttle valve (19a) for feeding a combustion chamber of the engine through an intake valve opening controlled through a camshaft-operated intake valve, with an intake air control valve (21) being disposed in the intake passage (17,17 ) downstream of the main throttle valve (19a) to control the cross-sectional air flow area of the intake passage (17,17') ) by a valve body (21a) of the intake air control valve (21) which partially closes a flow cross-section of the intake passage (17, 17') when fully closed, a switching valve (26) disposed in the intake passage (17,17') in between the main throttle valve (19a) and the intake air control valve (21) for controlling partially the cross-section of the intake passage (17,17') upstream of the intake air control valve (21), and a control unit (23) receiving engine load and engine speed responsive signals comprising a three dimensional control map for calculating an optimal opening position of the intake air control valve (21) and outputting driving signals (A) to a control motor (30) adjusting the opening position of the intake air control valve (21) and outputting driving signals (B) to a switching motor (31) for opening or closing said switching valve (26), whereby said control unit (23) is adapted to fully open said intake air control valve (21) when the engine speed is equal to or higher than a predetermined high speed value (a₁) or to fully close said intake air control valve (21) when the engine speed is equal to or lower than a predetermined low speed value (a₃), irrespective of any throttle value position or any amount of intake air per one revolution of the engine.

6. Intake air control system as claimed in claim 5, **characterized in that** the intake air control valve (21) traverses the intake passage (17, 17') which in turn comprises two parallel branch intake passages (17, 17').

7. Intake air control system as claimed in claim 5 or 6, **characterized in that** the switching valve (26) is disposed in an upstream carburettor joint (18), said switching valve (26) comprises a valve shaft (26a) penetrating the carburettor joint (18) in parallel with the air intake control valve (21), and a valve plate (26b) fixed on the valve shaft (26a) for opening or closing one of the branch intake passages (17).

8. Intake air control system as claimed in at least one of the preceding claims 5 to 7, **characterized in that** each of the control and switching motors (30, 31) comprising driving pulleys (22b, 26d) connected to a control pulley (22a) fixed to the intake air control valve (21) and connected to a switching pulley (26c) fixed to an outer end portion of the switching valve (26).

9. Intake air control system as claimed in at least one of the preceding claims 5 to 8, **characterized in that** the control unit (23) comprises first and second control maps for the ignition timing, wherein the first control map is applicable when an intake air control valve is not provided, whereas the second control map is applicable when the intake air control valve (21) is provided, said second control map introduces a delay of the ignition timing when the amount of intake air is low, said delay generally corresponds proportional to the opening degree of the intake air control valve (21).

## Patentansprüche

1. Verfahren zum Steuern der Einlaßluftzufuhr zu einer Brennkraftmaschine, welche umfaßt mindestens einen Einlaßluftkanal (17,17'), dessen Luftströmungs-Querschnittsfläche durch ein Hauptdrosselventil (19a) gesteuert wird, während ein anderes, abstromseitig von dem Hauptdrosselventil (19a) angeordnetes Einlaßluftsteuerventil (21) in einer lastabhängigen Weise gesteuert wird, wodurch das andere Einlaßluftsteuerventil (21) in Hinblick auf die Einlaßluftmenge pro Maschinenumdrehung so gesteuert wird, daß das Einlaßluftsteuerventil (21) zum teilweisen Schließen eines Strömungsquerschnittes des Einlaßkanals (17, 17') vollständig geschlossen gehalten wird, bis eine zunehmende Menge von Einlaßluft pro einer Maschinenumdrehung eine vorgegebene erste Schwelle (bₛ) erreicht, und daß das Einlaßluftsteuerventil (21) vollständig offen gehalten wird, bis eine abnehmende Einlaßluftmenge pro Maschinenumdrehung eine vorgegebene zweite Schwelle (b₀) erreicht, und daß das Einlaßluftsteuerventil (21) gesteuert wird, eine Zwischenposition anzunehmen, wenn die Einlaßluftmenge zwischen der ersten und der zweiten Schwelle (bₛ, b₀) liegt, **dadurch gekennzeichnet, daß** das Einlaßluftsteuerventil (21) vollständig geöffnet ist, wenn die Maschinendrehzahl gleich oder hoher als ein vorgegebener Hochdrehzahlwert (a₁) ist, oder vollständig geschlossen ist, wenn die Maschinendrehzahl gleich oder niedriger als ein vorgegebener Niedrigdrehzahlwert (a₃) ist, unabhängig von jeder Drosselventilposition oder jeder Einlaßluftmenge pro Umdrehung der Maschine.

2. Verfahren nach Anspruch 1, **dadurch gekennzeichnet, daß** der zweite Schwellwert (b₀) großer als der erste Schwellwert größer als der erste Schwellwert (bₛ) ist.

3. Verfahren nach Anspruch 1 oder 2, **dadurch gekennzeichnet, daß** der erste und der zweite Schwellwert (bₛ, b₀) wiederum von der Maschinendrehzahl abhängt.

4. Verfahren nach mindestens einem der vorangehenden Ansprüche 1 bis 3, **dadurch gekennzeichnet, daß** die Einlaßluftmenge pro Maschinenumdrehung bestimmt wird in Hinblick auf den Öffnungsgrad eines Drosselventils (19a) der Maschine.

5. Einlaßluft-Steuersystem für eine Brennkraftmaschine, welche umfaßt mindestens einen Einlaßluftkanal (17, 17'), der durch ein Hauptdrosselventil (19a) gesteuert wird zum Speisen einer Verbrennungskammer der Maschine durch eine durch ein nockenwellen-betätigtes Einlaßventil gesteuerte Einlaßventilöffnung, wobei ein Einlaßluft-Steuerventil (21) in dem Einlaßkanal (17, 17') abstromseitig von dem Hauptdrosselventil (19a) angeordnet ist, um die Querschnitts-Luftströmungsfläche des Einlaßkanals (17, 17') durch einen Ventilkörper (21a) des Einlaßluft-Steuerventils (21) zu steuern, der einen Strömungsquerschnitt des Einlaßkanals (17, 17') teilweise schließt, wenn er vollständig geschlossen ist, ein in dem Einlaßkanal (17, 17') zwischen dem Hauptdrosselventil (19a) und dem Einlaßluft-Steuerventil (21) angeordnetes Schaltventil (26), um den Querschnitt des Einlaßkanals (17, 17') zustromseitig von dem EinlaßluftSteuerventil (21) zu steuern, und eine von der Maschinenlast und der Maschinendrehzahl abhängige Signale empfangende Steuereinheit (23), welche eine dreidimensionale Steuerungsaufzeichnung zum Errechnen einer optimalen Öffnungsposition des Einlaßluft-Steuerventils (21) umfaßt und Ansteuersignale (A) zu einem Steuermotor (30) ausgibt, der die Öffnungsposition des Einlaßluft-Steuerventils (21) einstellt, und Ansteuersignale (B) an einen Schaltmotor (31) zum Öffnen und Schließen des Schaltventils (26) ausgibt, wodurch die Steuereinheit (23) ausgelegt ist, das Einlaßluft-Steuerventil (21) vollständig zu Öffnen, wenn die Maschinendrehzahl gleich dem oder höher als ein vorgegebener Hochdrehzahlwert (a₁) ist, oder das Einlaßluft-Steuerventil (21) vollständig zu schließen, wenn die Maschinendrehzahl gleich dem oder kleiner als ein vorgegebener Niedrigdrehzahlwert (a₃) ist, unabhängig von jeder Drosselventilposition oder jedem Einlaßluftwert pro einer Umdrehung der Maschine.

6. Einlaßluft-Steuersystem nach Anspruch 5, **dadurch gekennzeichnet, daß** das Einlaßluft-Steuerventil (21) den Einlaßkanal (17, 17') überquert, welcher wiederum zwei parallele Einlaß-Zweigkanäle (17, 17') umfaßt.

7. Einlaßluft-Steuersystem nach Anspruch 5 oder 6, **dadurch gekennzeichnet, daß** das Schaltventil (26) in einer zustromseitigen Vergaser-Verbindung (18) angeordnet ist, welches Schaltventil (26) einen die Vergaser-Verbindung (18) parallel mit dem Einlaßluft-Steuerventil (21) durchdringenden Ventilschaft (26a) umfaßt und eine an dem Ventilschaft (26a) befestigte Ventilplatte (26b) zum Öffnen oder Schließen eines der Einlaß-Zweigkanäle (17).

8. Einlaßluft-Steuersystem nach mindestens einem der vorangehenden Ansprüche 5 bis 7, **dadurch gekennzeichnet, daß** jeder der Steuer- und Schaltmotore (30, 31) Antriebsseilscheiben (22b, 26d) umfaßt, die mit einer an dem Einlaßluft-Steuerventil (21) befestigten Steuerseilscheibe (22a) bzw. mit einem an einem äußeren Endabschnitt des Schaltventils (26) befestigten Schaltseilscheibe (26c) verbunden sind.

9. Einlaßluft-Steuersystem nach mindestens einem der vorangehenden Ansprüche 5 bis 8, **dadurch gekennzeichnet, daß** die Steuereinheit (23) umfaßt erste und zweite Steueraufzeichnungen für die Zündzeitgabe, von denen die erste Steueraufzeichnung anzuwenden ist, wenn kein Einlaßluft-Steuerventil vorgesehen ist, während die zweite Steueraufzeichnung anzuwenden ist, wenn das Einlaßluft-Steuerventil (21) vorgesehen ist, wobei die zweite Steueraufzeichnung eine Verzögerung der Zündzeitgabe einführt, wenn die Einlaßluftmenge gering ist, welche Verzögerung allgemein proportional dem Öffnungsgrad des Einlaßluft-Steuerventils (21) entspricht.

## Revendications

1. Procédé de commande d'alimentation en air d'admission pour un moteur à combustion interne comprenant au moins un passage d'admission d'air (17, 17'), la section transversale du passage de flux d'air de celui-ci étant commandée par un clapet de commande des gaz principal (19a) alors qu'un autre clapet de commande d'admission d'air (21) disposé en aval du clapet de commande des gaz principal (19a) est commandé de manière à répondre au débit, ledit autre clapet de commande d'admission d'air (21) étant commandé en fonction de la quantité d'air à l'admission par tour du moteur de sorte que le clapet de commande d'admission d'air (21) est maintenu en position totalement fermée afin de fermer en partie une section transversale du flux de passage d'admission (17, 17') jusqu'à ce qu'une quantité croissante de l'air d'admission par tour du moteur atteigne un premier seuil prédéterminé (bs) et que le clapet de commande d'admission d'air (21) soit maintenu en position totalement ouverte jusqu'à ce qu'une quantité décroissante de l'air d'admission par tour du moteur atteigne un second seuil prédéterminé (bo) et que le clapet de commande d'admission d'air (21) soit commandé afin de prendre une position intermédiaire lorsque la quantité de l'air à l'admission se situe entre le premier et le second seuils, caractérisé en ce que :
le clapet de commande d'admission d'air (21) est totalement ouvert lorsque le régime du moteur est égal ou supérieur à une valeur de régime haut prédéterminée (ai) ou est totalement fermé lorsque le régime du moteur est égal ou inférieur à une valeur de régime bas prédéterminée (a3), sans tenir compte de la position du clapet de commande des gaz ni de la quantité de l'air admis par tour du moteur.

2. Procédé selon la revendication 1, caractérisé en ce que le second seuil (bₒ) est plus élevé que le premier seuil (bₛ).

3. Procédé selon la revendication 1 ou la revendication 2, caractérisé en ce que les premier et second seuils (bₛ, bₒ) sont respectivement fonction du régime moteur.

4. Procédé selon au moins l'une quelconque des revendication précédentes 1 à 3, caractérisé en ce que la quantité d'air admis par tour du moteur est déterminée en fonction du niveau d'ouverture d'un clapet de commande des gaz (19a) du moteur.

5. Système de commande d'admission d'air pour un moteur à combustion interne comprenant au moins un passage d'admission d'air (17, 17'), commandé par un clapet de commande des gaz principal (19a) afin d'alimenter une chambre de combustion du moteur par l'intermédiaire d'une ouverture de clapet d'admission et d'une soupape d'admission commandée par un arbre à cames, un clapet de commande d'admission d'air (21) étant disposé dans le passage d'admission (17, 17') en aval du clapet de commande des gaz principal (19a) afin de commander la section transversale du passage de flux d'air du passage d'admission (17, 17') à l'aide d'un corps de clapet (21a) du clapet de commande d'admission d'air (21) qui ferme en partie une section transversale de flux du passage d'admission (17, 17') lorsqu'il est totalement fermé, un clapet de commutation (26) disposé dans le passage d'admission (17, 17') entre le clapet principal de commande des gaz (19a) et le clapet de commande d'admission d'air (21) afin de commander en partie la section transversale du passage d'admission (17, 17') en amont du clapet de commande d'admission d'air (21), et une unité de commande (23) recevant des signaux en fonction de la charge du moteur et du régime du moteur comprenant une grille de commande à trois dimensions destinée à calculer une position d'ouverture optimale du clapet de commande d'admission d'air (21) et délivrant des signaux d'entraînement (A) à un moteur de commande (30) réglant la position d'ouverture du clapet de commande d'admission d'air (21) et délivrant des signaux d'entraînement (B) à un moteur de commutation afin d'ouvrir ou de fermer ledit clapet de commutation (26), ladite unité de commande (23) étant adaptée pour ouvrir totalement ledit clapet de commande d'admission d'air (21) lorsque le régime du moteur est égal ou supérieur à une valeur de régime haut prédéterminée (a1) ou pour fermer totalement ledit clapet de commande d'admission d'air (21) lorsque le régime du moteur est égal ou inférieur à une valeur de régime bas prédéterminée (a3), sans tenir compte de la position du clapet de commande des gaz ni de la quantité d'air admis par tour du moteur.

6. Système de commande d'admission d'air selon la revendication 5, caractérisé en ce que le clapet de commande d'admission d'air (21) traverse le passage d'admission (17, 17') qui à son tour comprend deux passages d'admission parallèles en dérivation (17, 17').

7. Système de commande d'admission d'air selon la revendication 5 ou la revendication 6, caractérisé en ce que le clapet de commutation (26) est disposé dans une jonction amont de carburateur (18), ledit clapet de commutation (26) comprend un axe de clapet (26a) pénétrant dans la jonction de carburateur (18) parallèlement au clapet de commande d'admission d'air (21), et une plaque de clapet (26b) fixée sur l'axe de clapet (26a) afin d'ouvrir ou de fermer l'un des passages d'admission en dérivation (17).

8. Système de commande d'admission d'air selon au moins l'une des revendications précédentes 5 à 7, caractérisé en ce que chacun des moteurs de commande et de commutation (30, 31) comprend des poulies d'entraînement (22b, 26d) reliées à une poulie de commande (22a) fixée au clapet de commande d'admission d'air (21) et reliées à une poulie de commutation (26c) fixée à une partie d'extrémité extérieure du clapet de commutation (26).

9. Système de commande d'admission d'air selon au moins l'une des revendications précédentes 5 à 8, caractérisé en ce que l'unité de commande (23) comprend une première et une seconde grilles de commande destinées au réglage de l'allumage, dans lequel la première grille de commande s'applique lorsqu'un clapet de commande d'admission d'air n'est pas fourni, alors que la seconde grille de commande s'applique lorsque le clapet de commande d'admission d'air (21) est fourni, ladite seconde grille de commande procure une temporisation du réglage de l'allumage lorsque la quantité d'air admis est faible, ladite temporisation étant de manière générale proportionnelle au degré d'ouverture du clapet de commande d'admission d'air (21).
